# EUROPÄISCHE PATENTSCHRIFT

(11) **EP 2 730 825 B1**
(45) Veröffentlichungstag und Bekanntmachung des Hinweises auf die Patenterteilung: **10.06.2015**
(21) Anmeldenummer: 12405116.0
(22) Anmeldetag: 07.11.2012
(51) Int. Cl.: F16K 31/06

(54) **Ventil und Verfahren zur Druck- oder Massenstromregelung durch das Ventil**
Valve and method for pressure or mass flow regulation by the valve
Vanne et procédé de régulation de la pression ou du débit massique par la vanne

(43) Veröffentlichungstag der Anmeldung: 14.05.2014
(73) Patentinhaber: Eugen Seitz AG, 8623 Wetzikon (CH)
(72) Erfinder: Ramsperger, Marcel, 8623 Wetzikon (CH); Janisch, Werner, 88697 Owingen-Hohenbodman (DE); Morawietz, Günter, 8610 Uster (CH)
(74) Vertreter: EGLI-EUROPEAN PATENT ATTORNEYS

(56) Entgegenhaltungen:
- WO-A1-01/06160
- US-A- 5 056 556

## Beschreibung

Die Erfindung betrifft ein Ventil nach Patentanspruch 1, ein Verfahren zur Druck- oder Massenstromregelung durch das Ventil nach Patentanspruch 13 und eine Anordnung nach Patentanspruch 19.

Ventile zur Druck- oder Massenstromregelung, beispielsweise von Hochdruck-Wasserstoff, sind seit langem bekannt, und werden z.B. in der WO 01/06160 A1 gezeigt.

Der Stand der Technik beschäftigt sich mit der Verbesserung einer Druckregelung kompressibler Medien durch schnell schaltende digitale Ventile. Problematisch beim kontinuierlichen Öffnen eines Dichtsitzes ist die Störkraftkomponente, welche die Öffnungskraftkomponente negativ beeinflusst und somit der kontinuierlichen Ventilhubregelung stark entgegenwirkt. Dieser Effekt entsteht durch den Druckabfall auf der Hochdruckseite und den Druckanstieg auf der Niederdruckseite des Dichtkörpers beim Öffnen bzw. Schliessen des Dichtsitzes.

Bei schnell schaltenden digitalen Ventilen ist die Ventilhubregelung nicht erforderlich, da ausschließlich die Ventilzustände geschlossen und geöffnet genutzt werden. Die Druckregelung mit digitalen Schaltventilen birgt jedoch einige Probleme, wie beispielsweise verringerte Lebensdauer durch hohe Schaltfrequenz, unzureichend konstante Dichtheit durch hohe Zyklenzahl über die gesamte Lebensdauer, pulsierender Ausgangsdruck bzw. großes nachgeschaltetes Ausgleichsvolumen und hohe Geräuschemission.

Die Anforderung an einen präzise geregelten Ausgangsdruck ist in Kombination mit der hohen internen Dichtheitsanforderung für Hochdruck-Wasserstoff schwierig, da sie grundsätzlich unterschiedliche konstruktive Lösungen erfordert.

Zur Druckregelung werden vorwiegend Schieberventile eingesetzt, da sie druckausgeglichen konstruiert werden können und dadurch keine vom Ausgangsdruck abhängige Störkraftkomponente aufweisen. Druckeingangsseitig und in der Druckausgleichskammer wirkt auf den Schieber derselbe Druck auf dieselbe, Fläche, was zu einem kraftausgeglichenen Schieber führt. Der zu regelnde Ausgangsdruck beeinflusst im Gegensatz zu einer Dichtkegel-Dichtsitz-Paarung nicht die axiale Aktorkraft.

Nachteilig wirkt sich bei Schieberventilen die große Ringspalt-Leckage aus. Diese wird bei vielen hydraulischen Systemen in Kauf genommen und über den Rücklauf wieder in den Kreislauf eingebracht. Die maximal erlaubte interne Leckage eines Wasserstoff-Hochdruckventils beträgt 10 Ncm3/h, was mit Schieberventilen nicht zu erreichen ist, da der Dichtspalt gleichzeitig die Schieberführung darstellt und nicht zu Null werden kann.

Zur Abdichtung zweier Gasräume unterschiedlichen Drucks werden meist Dichtkegel-Dichtsitz-Paarungen, auch als Kegelsitzdichtung bezeichnet, verwendet. Die Materialpaarung kann so gewählt sein, dass ein Material im Vergleich zum anderen weich ist und dessen elastische Verformbarkeit genutzt wird, um Unebenheiten des harten Materials auszugleichen. Aufgrund der geforderten Druckspreizung muss die Kegelsitzdichtung in der Lage sein auch große Kräfte aufzunehmen. Die über der Dichtgeometrie anliegende Druckdifferenz wird genutzt, um diese Dichtkraft auf den Dichtkörper zu erzeugen. Das bedeutet, dass die Druckdifferenz am Sitzventil für die Dichtfunktion unbedingt erforderlich ist, da die Dichtkraft proportional zur abzudichtenden Druckdifferenz ansteigt.

Die Materialpaarung hart-weich zwischen dem Dichtkegel und dem Dichtsitz führt jedoch bei Regelungsaufgaben zu Problemen, da zu den bereits genannten Störkräften (die vom veränderlichen Ausgangsdruck erzeugten Störkräfte) noch Klebeeffekte zwischen dem Dichtkegel und dem Dichtsitz auftreten können.

Die elastische Verformung durch das weiche Material dient zur zuverlässigen Abdichtung auch bei hohen Drücken. Es besteht jedoch ein Problem darin, dass sich die elastische Verformung negativ beim Regeln auswirkt. Der Grund hierfür liegt darin, dass ein geringer Ventilhub von der elastischen Rückverformung des weichen Materials ausgeglichen wird, ohne dass ein Strömungsquerschnitt freigegeben wird.

Oft werden in Ventilen Elastomere als Dichtungswerkstoff eingesetzt. Da strömende Gase innerhalb eines Ventils sehr kalt werden können, kühlen sie ihre Umgebung dementsprechend stark ab. Bei niedrigen Temperaturen verlieren die Elastomere ihre positiven Eigenschaften der hohen Elastizität. Im hier neu vorgestellten Ventilkonzept sind keine Elastomermaterialien an Stellen mit niedrigen Temperaturen notwendig.

Ein weiterer Nachteil ist Wasserstoffspezifisch und wird als "explosive Dekompression" bezeichnet. Bei hohem Druck dringt gasförmiger Wasserstoff in das Elastomer ein. Verringert sich der äußere Druck auf das Elastomer, findet der umgekehrte Prozess statt. Wird jedoch der Druck schneller reduziert, als sich die Wasserstoffmoleküle im Elastomermaterial bewegen können, so findet aufgrund der Druckreduzierung eine Dichtereduzierung des Wasserstoffs im Elastomer statt. Dieser Vorgang sprengt das Elastomermaterial auf und schädigt es irreparabel. Da im hier neu vorgestellten Ventilkonzept keine Elastomermaterialien an Stellen mit hohen Druckgradienten eingesetzt werden müssen, ist es gegenüber explosiver Dekompression unempfindlich

Die beiden Kernanforderungen eines Hochdruck-Schaltventils, nämlich die hohe Druckregelgüte und die hohe Dichtheit, erfordern somit bislang zwei unterschiedliche Ventilprinzipien. Im Stand der Technik ist es üblich für die Lösung dieser Aufgabenkombination zwei Komponenten in Reihe zu verwenden. Die Dichtheit wird durch eine Dichtkegel-Dichtsitz-Paarung in einer Kegelsitzdichtung erreicht, und die Druckregelung wird durch ein nachgeschaltetes Schieberventil erreicht. Diese beiden Komponenten sind bereits bekannt und werden oft gemeinsam verwendet. Nachteilig hieran ist die hohe Anzahl von notwendigen Bauteilen, wodurch die Kosten erhöht sind. Ein weiterer Nachteil besteht in der notwendigen gesonderten Ansteuerung dieser zwei Ventiltypen. Zudem wirken sich Interferenzen zwischen diesen beiden Bauteilen als nachteilig aus.

Es ist daher Aufgabe der vorliegenden Erfindung ein Ventil bereitzustellen, welches sowohl eine hohe Druckregelgüte als auch eine hohe Dichtheit hat und zudem kostengünstig in der Herstellung ist. Es ist ferner Aufgabe ein Verfahren zum Regeln eines Massenflusses durch das Ventil bereitzustellen.

Erfindungsgemäss wird diese Aufgabe durch ein Ventil zur Druck- oder Massenstromregelung gelöst, welches umfasst: ein Gehäuse mit einem Eingang und einem Ausgang; einen Zylinder mit einem Zylinderraum, durch welchen der Massenstrom führbar ist, mit einem Einlass, wenigstens einer entlang der Längsrichtung des Zylinders eingebrachten Auslassöffnung und einem geschlossenen Ende; und einen Kolbenkörper, welcher sich in den Zylinderraum hinein erstreckt und in Längsrichtung des Zylinderraums verschiebbar ansteuerbar ist. Der Kolbenkörper umfasst hierbei: einen Dichtkegel, welcher gegen einen am Einlass des Zylinderraums angebrachten Dichtsitz abdichtend in Anlage bringbar ist, einen innerhalb des Zylinderraums verschiebbar geführten zylindrischen Schieber, dessen Aussenmass geringer ist als das Innenmass des Zylinderraums, und welcher ausgelegt ist die Öffnungsweite der Auslassöffnung durch die verschiebbare Ansteuerung des Kolbenkörpers zu steuern, eine Druckausgleichsanordnung, welche ausgelegt ist einen Druckausgleich zwischen dem Zylinderraum und allen mit dem Zylinderraum kommunizierenden Volumina und dem geschlossenen Ende herzustellen, und ein Antriebselement zum verschiebbaren Ansteuern des Kolbenkörpers.

Hierdurch ist auf einfache Weise ein Ventil geschaffen, welches die positiven Eigenschaften einer Kegelsitzdichtung und eines Schieberventils in einer einzigen Einheit vereint. Besonders durch das Betreiben beider Ventilkonzepte mit demselben Aktor werden Vorteile im Preis, Bauraum, Gewicht, Teilezahl und Energieverbrauch erzielt.

Die in Massenstrom-Richtung betrachtet vorgelagerte Dichtkegel-Dichtsitz-Paarung dichtet hierbei im geschlossenen Zustand den Einlass des Zylinderraums zuverlässig ab. Die Dichtpaarung kann in jeder erdenklichen Form ausgeführt sein, deren Druckdifferenz über dem Dichtkörper eine Schliesskraft erzeugt. Hierbei hat es sich als vorteilhaft erwiesen, dass kreisförmige Geometrien verwendet werden, da sich der Dichtkörper somit selbst zentriert und sich radiale Kräfte zumeist ausgleichen. Ebenso kann die Anordnung aus Dicht- und Regelelement in Massenstromrichtung vertauscht sein. Um in den Druckregelbetrieb des Ventils zu wechseln wird diese Paarung abrupt geöffnet, indem der Kolbenkörper in entgegengesetzte Richtung der Massenstrom-Richtung bewegt wird. Diese Bewegung muss so ausgeführt werden, dass die gesamte Anker-Kolbenkörper-Schieber Baugruppe von einem Endanschlag zum anderen Anschlag verfährt.

Diese Bewegung kann durch eine elektromagnetische Kraft hervorgerufen werden, welche durch eine Bestromung einer Spule von einer Anker-Spulen-Anordnung eingeleitet wird. Durch diese Bewegung wird gleichzeitig der am distalen Ende des Kolbenkörpers ausgebildete Schieber in die Richtung zum Verschliessen der Auslassöffnung des Zylinderraums bewegt. Mit dieser Bewegung wird sowohl die Dichtkegel-Dichtsitz-Paarung geöffnet als auch die Auslassöffnung des Zylinderraums verschlossen.

Der durch die Dichtkegel-Dichtsitz-Paarung strömende Massenstrom strömt somit zunächst in den Zylinderraum. Ein Teil dieses Massenstroms strömt durch die Druckausgleichsanordnung und tritt am distalen Ende des Kolbenkörpers in das geschlossene Ende, auch als Druckausgleichsraum bezeichnet, am distalen Ende des Zylinderraums aus. Dieser Raum ist somit entgegengesetzt zum geschlossenen Ende durch einen axial verschiebbaren Schieber abgeschlossen. Durch den einströmenden Massenstrom wird somit ein Druck im Druckausgleichsraum aufgebaut, welcher dem Druck im Zylinderraum entspricht. Somit wird insgesamt ein Druckausgleich zwischen dem Druckausgleichsraum und dem Zylinderraum hergestellt. Bei identischer Querschnittsfläche der Nennweite des Druckausgleichsraums und der Nennweite des Zylinderraums, werden somit jegliche Störkraftkomponenten eliminiert. Hierdurch ist eine hervorragende Regelgüte erzielbar. Zwingend erforderlich ist, dass der Strömungswiderstand der Druckausgleichsbohrung wesentlich geringer ist als der Strömungswiderstand des Ringspalts zwischen Zylinder und Schieber.

Bei diesem Ventilregelzustand ergibt sich am Ringspalt, also in der Überlappung zwischen dem Schieber und dem Zylinder, ein geringes Entweichen des Mediums in Richtung zum Ausgang. Hierdurch kann beispielsweise eine dem Ventil nachgeschaltete Brennstoffzelle mit einer für den "Grundlastbetrieb" notwendigen Menge an Wasserstoff versorgt werden. Das Ventil ermöglicht insgesamt eine Massenstrom-Regelung bzw. DruckRegelung mit hoher Regelgüte und geringem Energieaufwand, da keine druckabhängigen Störkräfte vorliegen.

Vorzugsweise ist die Druckausgleichsanordnung als eine längsgerichtete Druckausgleichsbohrung ausgebildet, welche in Längsrichtung innerhalb des Kolbenkörpers in einem Bereich vom distalen Ende, entlang eines innerhalb des Zylinderraums geführten Abschnittes bis zu wenigstens einer quergerichteten Druckausgleichsbohrung in einem Abschnitt zwischen dem Dichtkegel und dem Schieber bereitgestellt ist. Der durch die Dichtkegel-Dichtsitz-Paarung strömende Massenstrom strömt somit zunächst in den Zylinderraum, wobei ein Teil dieses Massenstroms über die in Längsrichtung ausgerichtete Druckausgleichsbohrung in das geschlossene Ende strömt. Hierdurch wird auf einfache Weise ein Druck aufgebaut, welcher dem Druck im Zylinderraum entspricht.

Vorzugsweise umfasst das Ventil einen Positionssensor zur Positionserfassung des Kolbenkörpers, ausgelegt zur Positionsregelung des Schiebers. Hierdurch ist die Position des Kolbenkörpers eindeutig bestimmbar.

Vorzugsweise ist das Antriebselement als eine elektromagnetische Zugmagnet-Anordnung ausgebildet, umfassend einen zylindrischen Anker, mindestens einen magnetischen Rückschluss, einen Arbeitsluftspalt und eine Spule, zur Erzeugung einer elektromagnetischen Kraft in Abhängigkeit von einer Bestromung der Spule, welche die verschiebbare Ansteuerung des Kolbenkörpers in Längsrichtung des Zylinderraums hervorruft, ferner umfassend ein Rückstellelement, welches ausgelegt ist den Kolbenkörper entgegen der Kraftrichtung der elektromagnetischen Zugmagnet-Anordnung vorzuspannen. Um das Ventil dicht zu verschließen, wird die Bestromung auf Null reduziert, wodurch ein Rückstellelement den Anker in die Endstellung bewegt, in der die Dichtkegel-Dichtsitz-Paarung die beiden Volumina abdichtet. Die dann entstehende Druckdifferenz erhöht die Dichtkraft und somit die Dichtheit des Ventils. Hierdurch lässt sich der Kolbenkörper mit einfachen Mitteln zuverlässig axial gegen die Federkraft, die in Schliessrichtung des Dichtkegels wirkt, bewegen. Die Regelung erfolgt mit Hilfe der Bestromung der Spule von der Anker-Spulen-Anordnung. Mit Reduktion der Bestromung der Spule schiebt sich der Schieber weiter in den Druckausgleichsraum hinein und erweitert somit die Öffnungsweite der Auslassöffnung des Zylinderraums. Hierdurch wird am Ausgang des Ventils ein erhöhter Massenstrom bereitgestellt. Der Kolbenkörper ist durch das Rückstellelement entgegen der Kraftrichtung des Antriebselements vorgespannt. Das Rückstellelement kann als eine Feder ausgebildet sein, welche derart ausgeführt und angeordnet ist, dass eine Vorspannkraft an den Kolbenkörper entgegen der Kraftrichtung des Antriebselements angelegt wird. Vorteilhafterweise wird der Dichtkegel der Dichtkegel-Dichtsitz-Paarung somit im stromlosen Zustand der Spule besonders zuverlässig und fest gegen den Dichtsitz gedrückt. Somit verbleibt das Ventil im stromlosen Zustand zuverlässig verschlossen. Aus den unterschiedlichen Kraftrichtungen des Antriebs- und Rückstellelements ergeben sich stabile Arbeitspunkte, die mit Hilfe der Spulenbestromung erreicht werden. Zusätzlich ergibt sich aus dem stromlos geschlossenen Zustand, dass die Baugruppe im sicheren Zustand ist, was sicherheitstechnisch Vorteile bringt.

Die Höhe der Bestromung der Spule darf nicht unterhalb einen vorbestimmten minimalen Schwellenwert reduziert werden, da ansonsten der Dichtkegel der Dichtkegel-Dichtsitz-Paarung, in Kombination mit dem Dichtsitz, den Massenstrom reduziert, was zu einer Instabilität der Regelung führen würde. Um das Ventil dicht zu verschliessen wird die Bestromung auf Null reduziert, wodurch das Rückstellelement den Anker in die Endstellung bewegt, in welcher die Dichtkegel-Dichtsitz-Paarung die beiden Volumina abdichtet. Die dann entstehende Druckdifferenz erhöht die Dichtkraft und somit die Dichtheit des Ventils. Der Antrieb des Kolbenkörpers kann auch auf andere Weise als durch eine Anker-Spulen-Anordnung erfolgen.

Vorzugsweise ist der Anker an einem ausserhalb des Zylinderraums geführten Abschnitt des Kolbenkörpers und koaxial zu diesem ausgerichtet mit dem Kolbenkörper verbunden. In dieser Ausführung erstreckt sich der Kolbenkörper aus dem Zylinderraum heraus und ist der Anker an einem Abschnitt dieser Erstreckung fest mit dem Kolbenkörper verbunden. Die elektromagnetische Anker-Spulen-Wechselwirkung zur Krafterzeugung bzw. zum Bewegen des Kolbenkörpers findet somit entfernt vom Zylinder statt. Hierdurch können die Ausmasse vom Anker und von der Spule im Wesentlichen frei von baulichen Beschränkungen gewählt werden. Die Kraft kann auch an jeglichen anderen Orten als hier geschildert erzeugt werden.

Vorzugsweise ist die Spule als Topfmagnetspule ausgebildet, welche koaxial zum Anker ausgerichtet im oder am Ventil befestigt ist. Hierdurch werden die zuvor geschilderten Vorteile erzielt.

Vorzugsweise sind der Dichtkegel und/oder der Schieber und/oder der Anker einstückig mit dem Kolbenkörper ausgebildet. Hierdurch lassen sich die jeweils positiven Eigenschaften eines Kegeldichtventils und eines Schieberventils zu nur einer einzigen Ventileinheit vereinen. Im Vergleich zu Lösungen aus dem Stand der Technik ist hierzu eine weitaus reduzierte Anzahl von Bauteilen nötig, wodurch das Ventil günstiger und kompakter wird. Zudem ist insgesamt die Regelgüte auf effektive Weise erhöht.

Vorzugsweise ist der Anker in einem Druckrohr verschiebbar, dessen Innenmass grösser ist als das Aussenmass des Ankers. Der Anker wird somit vorteilhafterweise exakt axial geführt.

Vorzugsweise ist der Kolbenkörper an wenigstens einem seiner Enden durch eine Längsführung gelagert. Diese Längsführung ist im Gehäuse integriert und kann mit Hilfe einer Bohrung ausgeführt sein, innerhalb welcher der Endabschnitt des Kolbenkörpers passgenau axial bewegbar gelagert ist. Somit kann der Kolbenkörper zuverlässig und nahezu reibungslos bewegt werden. Hierdurch werden die Dichtheit und die Regelgenauigkeit des Ventils und zudem dessen Lebensdauer erhöht. Vorzugsweise ist der Kolbenkörper an der Anordnung bestehend aus Schieber und Zylinder gelagert. Durch diese Ausgestaltung wird der Anker vorteilhafterweise einerseits durch die Längsführung und andererseits durch die Schieber-Zylinder-Paarung exakt axial geführt. Es sind weitere Arten der Lagerung denkbar.

Vorzugsweise ist der Anker mit in Längsrichtung ausgerichteten Durchgangsbohrungen versehen, zur Bereitstellung einer Massenstrom-Verbindung vom Eingang des Gehäuses zum Einlass des Zylinderraums. Im Falle der umfänglichen Führung des Ankers innerhalb des Druckrohrs ist somit ein zuverlässiger Massenstrom-Durchgang vom Eingang des Gehäuses zum Einlass des Zylinders möglich, indem der Massenstrom einfach in Längsrichtung durch den Anker hindurch geleitet wird. Es sind auch andere oder zusätzliche Massenstromführungen denkbar.

Vorzugsweise ist der Dichtkegel an einem ausserhalb des Zylinderraums geführten Abschnitt des Kolbenkörpers angeordnet und von ausserhalb des Zylinderraums gegen den am Einlass des Zylinderraums angebrachten Dichtsitz abdichtend in Anlage bringbar.

Die zuvor genannte Aufgabe wird zudem durch ein Verfahren zur Druck- oder Massenstromregelung durch ein Ventil nach einem der Ansprüche 1 bis 12 gelöst. Das Verfahren enthält die Schritte: a) Ansteuern des Kolbenkörpers durch das Antriebselement mit einer Regelgrösse zum Bewegen des Kolbenkörpers in eine der Verschlussrichtung der Dichtkegel-Dichtsitz-Paarung entgegengesetzte Richtung, wodurch die Öffnungsweite der Auslassöffnung durch den Schieber minimiert wird; b) Regeln der Ansteuerung des Kolbenkörpers mit einer regelbaren Regelgrösse, wodurch die Öffnungsweite der Auslassöffnung durch Verschieben des Schiebers in Relation zur Regelgrösse erweitert oder verengt wird; und c) Ausschalten der Ansteuerung des Kolbenkörpers, wodurch der Kolbenkörper in die in Verschlussrichtung der Dichtkegel-Dichtsitz-Paarung gerichtete Richtung bewegt wird, zum vollständigen Absperren des Massenstroms, indem der Dichtkegel gegen den Dichtsitz in Anlage gebracht wird. Hierdurch ist ein Verfahren zur Druck- oder Massenstromregelung bei hoher Regelgüte und hoher Dichtigkeit geschaffen.

Vorzugsweise wird die Ansteuerung in Ansprechen auf eine von einem Positionssensor erfasste Position des Kolbenkörpers geregelt.

Vorzugsweise umfasst der Schritt des Ansteuerns des Kolbenkörpers durch das Antriebselement einen Schritt zum Ansteuern des Kolbenkörpers mit einem Öffnungsimpuls zum Entdrosseln des Dichtsitzes.

Vorzugsweise ist das Antriebselement als eine elektromagnetische Zugmagnet-Anordnung ausgebildet.

Vorzugsweise umfasst der Schritt des Ansteuerns des Kolbenkörpers durch das Antriebselement einen Schritt zum Ansteuern des Kolbenkörpers mit einer maximalen Regelgrösse, wobei der Kolbenkörper beim Ansteuern bis zu einem mechanischen Endanschlag bewegt wird.

Vorzugsweise umfasst das Ventil ferner ein Rückstellelement, welches den Kolbenkörper entgegen der Kraftrichtung der elektromagnetischen Zugmagnet-Anordnung vorspannt.

Die zuvor genannte Aufgabe wird zudem durch eine Anordnung gelöst, umfassend ein Ventil nach einem der Ansprüche 1 bis 12 und eine druckregelnde Vorstufe. Vorzugsweise ist die druckregelnde Vorstufe passiv. Vorzugsweise ist die druckregelnde Vorstufe eine Druckwaage.

Im Folgenden wird die Erfindung anhand eines Ausführungsbeispiels näher erläutert. Hierbei zeigen:
- Figur 1: eine detaillierte Ansicht eines Ventils in axialer Schnittansicht im geschlossenen Zustand der Dichtkegel-Dichtsitz-Paarung;
- Figur 2: eine detaillierte Ansicht des Ventils in axialer Schnittansicht im geöffneten Zustand der Dichtkegel-Dichtsitz-Paarung, wobei der Schieber geschlossen ist;
- Figur 3: eine vergrösserte Ansicht der Regelkante des Ventils in axialer Schnittansicht im geschlossenen Zustand der Dichtkegel-Dichtsitz-Paarung;
- Figur 4: eine vergrösserte Ansicht der Regelkante des Ventils in axialer Schnittansicht im vollständig geöffneten Zustand der Dichtkegel-Dichtsitz-Paarung, wobei der Schieber geschlossen ist;
- Figur 5: eine vergrösserte Ansicht der Regelkante des Ventils in axialer Schnittansicht im Regelzustand;
- Figur 6: eine schematische Ansicht des Ventils in axialer Schnittansicht gemäss der Erfindung; und
- Figuren 7a, b: jeweils eine Ansicht einer Dichtkegel-Dichtsitz-Paarung und eines Schieberventils aus dem Stand der Technik.

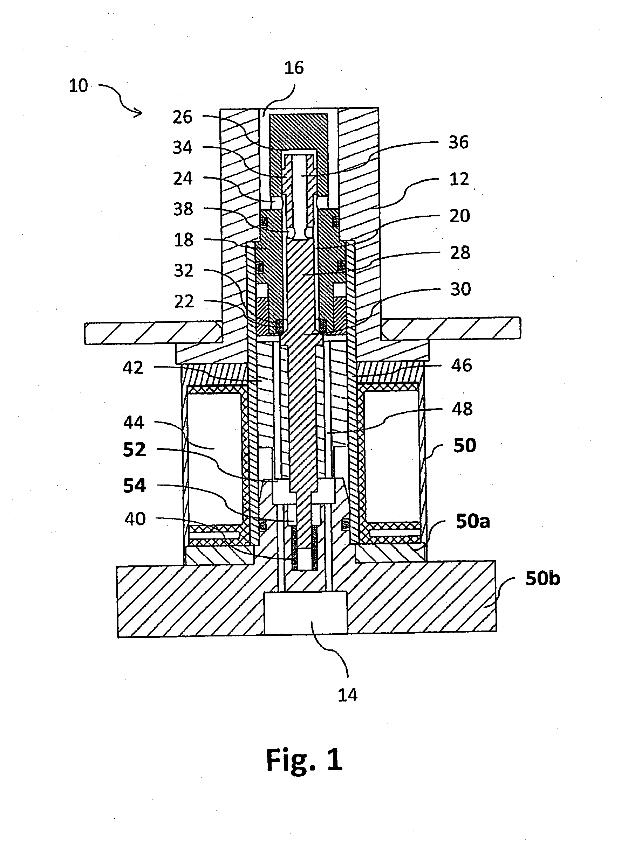

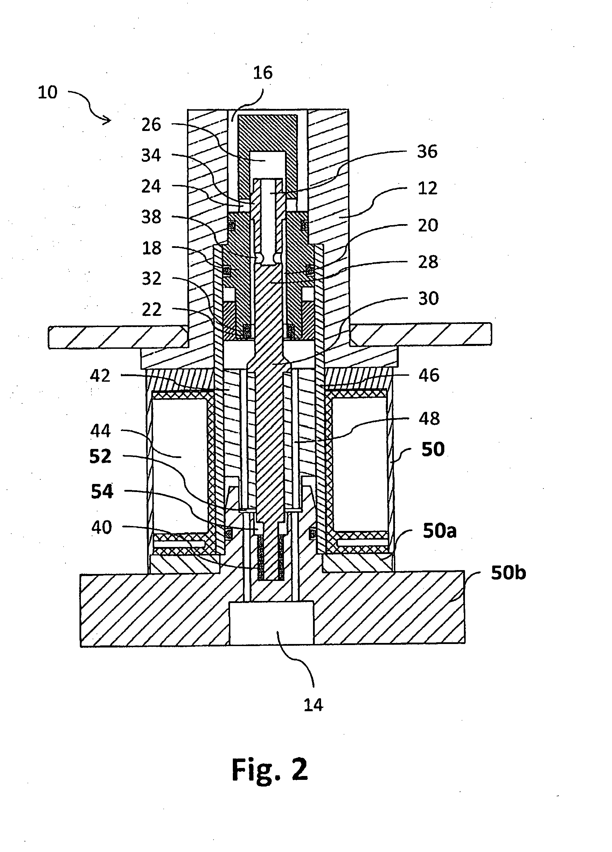

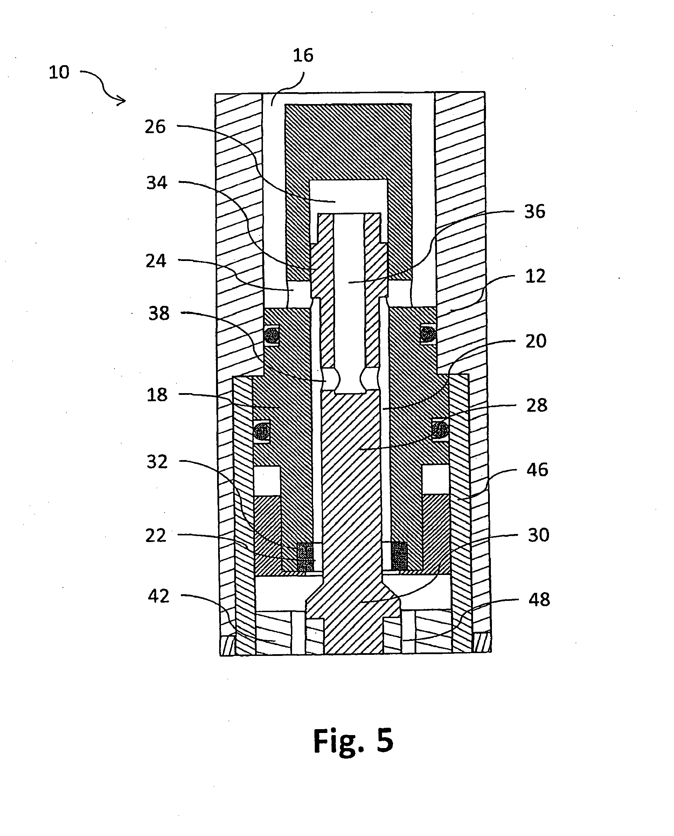

Figuren 1 und 2 zeigen jeweils eine detaillierte Darstellung eines Ventils 10 in axialer Schnittansicht. Hierbei zeigt Figur 1 das Ventil 10 in einem geschlossenen Zustand der Dichtkegel-Dichtsitz-Paarung und zeigt Figur 2 das Ventil 10 in einem geöffneten Zustand der Dichtkegel-Dichtsitz-Paarung. Das Ventil 10 ist zur Druck- oder Massenstromregelung ausgelegt und umfasst ein Gehäuse 12 mit einem Eingang 14 und einem Ausgang 16 des Massenstroms. Ferner ist ein Zylinder 18 mit einem Zylinderraum 20 umfasst. Im geöffneten Zustand des Ventils 10, d.h. in einem geöffneten Zustand der Dichtkegel-Dichtsitz-Paarung, wird der Massenstrom über einen Einlass 22 in den Zylinderraum 20 eingeströmt. Im Regelungsbetrieb des Ventils 10 (wie später in Fig. 5 gezeigt und beschrieben) wird der Massenstrom aus einer entlang der Längsrichtung des Zylinders 18 eingebrachten Auslassöffnung 24 ausgeströmt, wie im Folgenden detailliert beschrieben. Das dem Einlass 22 gegenüberliegende Ende des Zylinders 18 ist durch ein geschlossenes Ende 26 gebildet, welches als Druckausgleichsraum ausgeführt ist.

Das Ventil 10 enthält ferner einen zylindrischen Kolbenkörper 28, welcher sich abschnittsweise in den Zylinderraum 20 hinein erstreckt. Der Kolbenkörper 28 ist durch eine Anker-Spulen-Anordnung (Zugmagnet-Anordnung) elektromagnetisch in Längsrichtung des Zylinderraums 20 verschiebbar ansteuerbar. Das Ventil 10 ist durch eine Dichtkegel-Dichtsitz-Paarung (Kegelsitzdichtung) zuverlässig verschliessbar. Diese Dichtkegel-Dichtsitz-Paarung umfasst einen Dichtkegel 30, welcher an einem ausserhalb des Zylinderraums 20 geführten Abschnitt des Kolbenkörpers 28 mit diesem fest verbunden ist. Vorteilhafterweise ist der Dichtkegel 30 einstückig mit dem Kolbenkörper 28 und/oder Anker ausgebildet. Als Gegenstück des Dichtkegels 30 dient ein Dichtsitz 32, welcher konzentrisch um den Einlass 22 des Zylinders 18 herum angeordnet ist. Der Dichtkegel 30 kann somit von ausserhalb des Zylinderraums 20 zuverlässig gegen den am Einlass 22 angebrachten Dichtsitz 32 abdichtend in Anlage gebracht werden.

Das Ventil 10 enthält ferner einen innerhalb des Zylinderraums 20 verschiebbar geführten zylindrischen Schieber 34, dessen Aussenmass im Wesentlichen gleich dem Innenmass des Zylinderraums 20 ist. Der Schieber 34 ist am distalen Ende des Kolbenkörpers 28 angebracht und ragt in das geschlossene Ende 26 des Zylinders 18 hinein. Durch die verschiebbare Ansteuerung des Kolbenkörpers 28 kann somit die Öffnungsweite der Auslassöffnung 24 durch den Schieber 34 präzise verändert werden.

Der Kolbenkörper 28 ist an seinem distalen Ende und entlang eines innerhalb des Zylinderraums 20 geführten Abschnittes mit einer in Längsrichtung ausgerichteten Druckausgleichsbohrung 36 versehen, welche in einem Abschnitt zwischen dem Dichtkegel 30 und dem Schieber 34 durch wenigstens eine quergerichtete Druckausgleichsbohrung 38 mit dem Zylinderraum 20 verbunden ist. Somit wird, im geöffneten Zustand der Dichtkegel-Dichtsitz-Paarung, ein Anteil des Massenstroms in die quergerichtete Druckausgleichsbohrung 38 eintreten, durch die längsgerichtete Druckausgleichsbohrung 36 strömen und am distalen Ende des Kolbenkörpers 28 in das geschlossene Ende 26 des Zylinders 18 austreten, wodurch im geschlossenen Ende 26 ein Druck erzeugt wird, welcher gleich dem Druck innerhalb des Zylinderraums 20 ist. Hierdurch werden jegliche Störkraftkomponenten eliminiert, woraus eine hervorragende Regelgüte resultiert. Vorteilhafterweise ist der Schieber 34 einstückig mit dem Kolbenkörper 28 ausgebildet. Jegliche andere Art des Druckausgleichs zwischen dem Zylinderraum 20 und dem geschlossenen Ende 26 als hier gezeigt und beschrieben kann verwendet werden. Eine Druckausgleichsbohrung ist eine einfache Art des Druckausgleichs. Der Druckausgleich muss nicht durch den Kolbenkörper 28 stattfinden.

Zur besonders zuverlässigen Führung des Kolbenkörpers 28 ist das zum Eingang 14 des Gehäuses 12 hin ausgerichtete Ende des Kolbenkörpers 28 abschnittsweise innerhalb einer Längsführung 40 gelagert. Notwendiger Weise wird der Kolbenkörper 28 durch ein Rückstellelement, beispielsweise eine Feder (nicht gezeigt), entgegen der Kraftrichtung des Antriebselements vorgespannt. Hierdurch wird, im Falle eines Absperrens des Ventils 10, ein besonders zuverlässiges Andrücken des Dichtkegels 30 gegen den Dichtsitz 32 gewährleistet.

Wie zuvor erwähnt, kann der Kolbenkörper 28 elektromagnetisch betätigt bzw. bewegt werden. Hierzu ist eine elektromagnetische Zugmagnet-Anordnung, umfassend einen Anker 42, einen magnetischen Rückschluss 50, 50a, 50b, einen Arbeitsluftspalt 52 und eine Spule 44, vorgesehen. Bei einer Bestromung der Spule 44 wird eine elektromagnetische Kraft an den Anker 42 und somit an den Kolbenkörper 28 angelegt, durch welche die verschiebbare Ansteuerung des Ventilkörpers 28 in Längsrichtung des Zylinders 18 hervorgerufen wird. Hierdurch wird der Dichtkegel 30 aus der Anlage gegen den Dichtsitz 32 gebracht. Mit anderen Worten, wird die Dichtkegel-Dichtsitz-Paarung geöffnet (s. Figur 2). Besonders bevorzugt ist der Anker 42 an einem ausserhalb des Zylinderraums 20 geführten Abschnitt des Kolbenkörpers 28 und konzentrisch zu diesem ausgerichtet mit dem Kolbenkörper 28 verbunden. In diesem Beispiel ist die Spule 44 als eine Topfmagnetspule ausgebildet, welche wiederum koaxial zum Anker 42 ausgerichtet im oder am Gehäuse 12 fixiert ist.

Der Anker 42 ist in dem gezeigten Beispiel innerhalb von einem zylindrischen Druckrohr 46 verschiebbar geführt, dessen Innenmass grösser ist als das Aussenmass des Ankers 42. In diesem Beispiel ist der Anker 42 ferner mit in Längsrichtung ausgerichteten Durchgangsbohrungen 48 versehen. Diese Durchgangsbohrungen 48 stellen eine Massenstrom-Verbindung vom Eingang 14 des Gehäuses 12 zum Einlass 22 des Zylinders 18 her. Die elektromagnetische Zugmagnet-Anordnung umfasst neben dem Anker 42 und der Spule 44 ferner einen magnetischen Rückschluss 50, 50a, 50b und einen Arbeitsluftspalt 52 zur Erzeugung elektromagnetischer Kraft. Zum Rückstellen des Kolbenkörpers 28 in Ruhestellung im stromlosen Zustand der Spule 44 ist das Rückstellelement in einem Raum 54 für das Rückstellelement angeordnet.

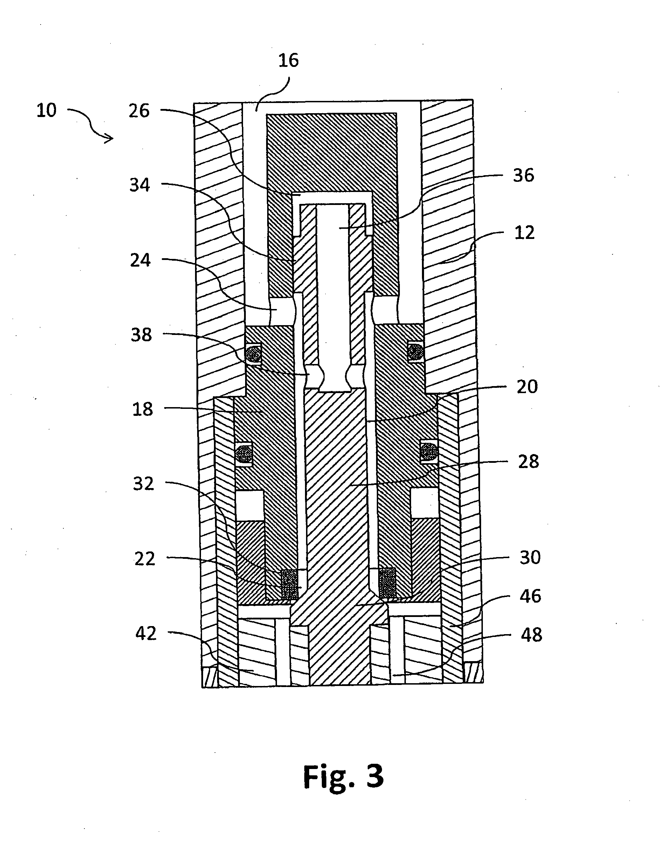

Figur 3 zeigt eine vergrösserte Schnittansicht eines Bereiches der Dichtkante des Ventils 10 im geschlossenen Zustand der Dichtkegel-Dichtsitz-Paarung. In dem gezeigten Zustand ist die Spule (siehe Figuren 1 und 2) unbestromt. Aufgrund der Federkraft wird der Kolbenkörper 28 samt Anker 42 zuverlässig in die Schliessposition gedrückt. Hierbei drückt der Dichtkegel 30 fest gegen den Dichtsitz 32. Die dadurch entstehende Druckdifferenz zwischen dem Eingang 14 und dem Zylinderraum 20 erzeugt eine zusätzliche Dichtkraft auf die Dichtkegel-Dichtsitz-Paarung. Damit das Ventil 10 im unbestromten Zustand der Spule zuverlässig schliesst, wird wenigstens ein geeignetes Rückstellelement (nicht gezeigt) bereitgestellt, welches den Kolbenkörper 28 zuverlässig in die Schliessposition drückt. Ein jeglicher Massenstrom wird somit zuverlässig abgesperrt.

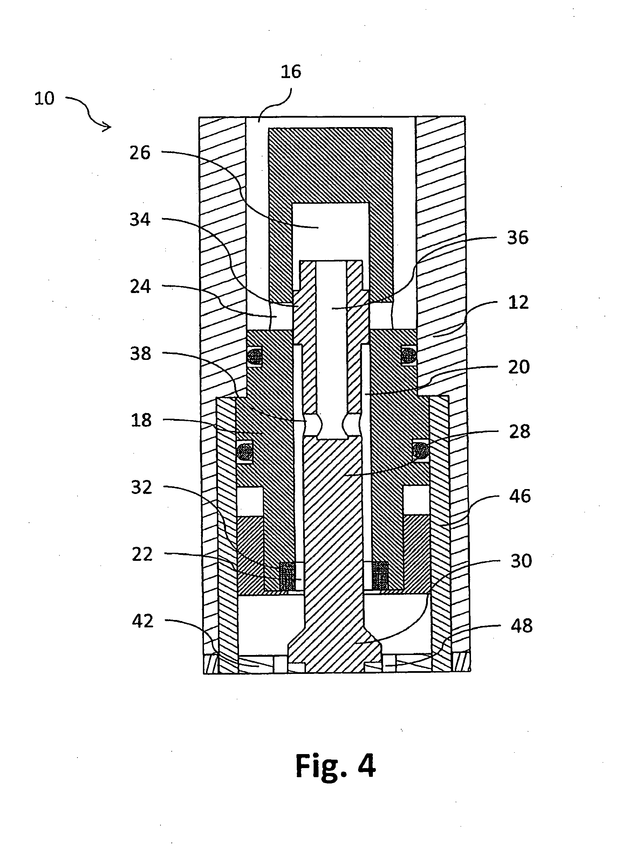

Figur 4 zeigt eine vergrösserte Schnittansicht des Bereiches der Dichtkante des Ventils 10 im vollständig geöffneten Zustand der Dichtkegel-Dichtsitz-Paarung. In diesem Zustand ist die in Figuren 1 und 2 gezeigte Spule beispielsweise maximal bestromt und erzeugt im Zusammenwirken mit dem Anker eine elektromagnetische Kraft, welche an den Kolbenkörper 28 angelegt wird. Diese Kraft ist entgegengesetzt zur Schliessrichtung der Dichtkegel-Dichtsitz-Paarung ausgerichtet. Gleichzeitig wird der mit dem Kolbenkörper 28 fest verbundene Schieber 34 in die gleiche Richtung (in dem in den Figuren gezeigten Beispiel eine nach unten gerichtete Richtung) verschoben und verschliesst hierbei die in den Zylinder 18 eingebrachte Auslassöffnung 24. Somit wurde vom Betrieb des Ventils 10 im Dichtzustand in den Regelzustand gewechselt.

Im Regelzustand ergibt es sich, dass ein geringer Anteil des Massenstroms an der Regelkante durch einen Ringspalt zwischen dem Schieber 34 und der Zylinderwand des Zylinders 18 ausströmen kann. Der durch den Ringspalt strömende Massenstrom definiert im Regelungsbetrieb den minimalen Massenstrom den das System liefern kann. Ein weiterer Anteil des Massenstroms fliesst über die längsgerichtete Druckausgleichsbohrung 36 des Kolbenkörpers 28 in das geschlossene Ende 26 zum Herstellen eines Druckausgleichs zwischen dem geschlossenen Ende 26 und dem Zylinderraum 20. Hierdurch wird eine jegliche Störkraftkomponente eliminiert.

Figur 5 zeigt eine detaillierte Schnittansicht des Ventils 10 im Regelungsbetrieb. In diesem Zustand ist die Dichtkegel-Dichtsitz-Paarung weiterhin geöffnet. Im Vergleich zu dem in Figur 4 gezeigten Zustand ist die Spule (in Figuren 1 und 2 gezeigt) nicht maximal sondern geringer bestromt, wodurch der Kolbenkörper 28 ein stückweit in Schliessrichtung der Dichtkegel-Dichtsitz-Paarung, bzw. in Richtung des geschlossenen Endes 26, verschoben wird. Hierdurch wird die Auslassöffnung 24 an der Regelkante mit einer bestimmten Öffnungsweite geöffnet, so dass hier ein Austritt des Massenstroms durch die Auslassöffnung 24 zum Ausgang 16 des Ventils 10 freigegeben wird.

In diesem Zustand kann der Massenstrom in Abhängigkeit der Höhe der Bestromung der Spule sehr genau geregelt werden. Mit abnehmender Höhe der Bestromung wird hierbei die Öffnungsweite der Auslassöffnung 24 an der Regelkante erweitert, wodurch der Massenstrom in Richtung zum Ausgang 16 des Ventils 10 erhöht wird. Hierbei strömt der Massenstrom von der Auslassöffnung 24 ausgehend durch einen zylindrischen Abschnitt zwischen Zylinder 18 und Gehäuse 12 in Richtung zum Ausgang 16 des Ventils 10. Je nachdem ob ein Massenstrom oder ein Ausgangsdruck gemessen und zum Regler zurückgeführt wird, kann ein Massenstrom- oder Druckregler mit dem Ventil 10 aufgebaut werden. Um ein Druck oder Massenstromregelventil zu betreiben, kann eine Rückführung des jeweiligen Signals umfasst sein. Es kann ein Sensor zur Erfassung des zu regelnden Druck- oder Massenstromsignals vorgesehen sein, das zur Regelungselektronik zurückgeführt wird. Ebenso kann das Ventil 10 in offener Steuerkette, d.h. ohne notwendige Sensorsignale, zur Kostenersparnis betrieben werden.

Es zeigt sich besonders deutlich, dass hierbei die hohe Regelgüte einer Schieberventil-Anordnung zum Tragen kommt. Soll das Ventil 10 von diesem Zustand aus wieder vollständig schliessen, so muss lediglich die Bestromung der Spule beendet werden, wodurch der Dichtkegel 30 schnell und zuverlässig wieder in fester Anlage mit dem Dichtsitz 32 gelangt. In diesem abgesperrten Zustand kommen die geringe Leckage und die besonders zuverlässige Abdichtbarkeit der Dichtkegel-Dichtsitz-Paarung zum Tragen.

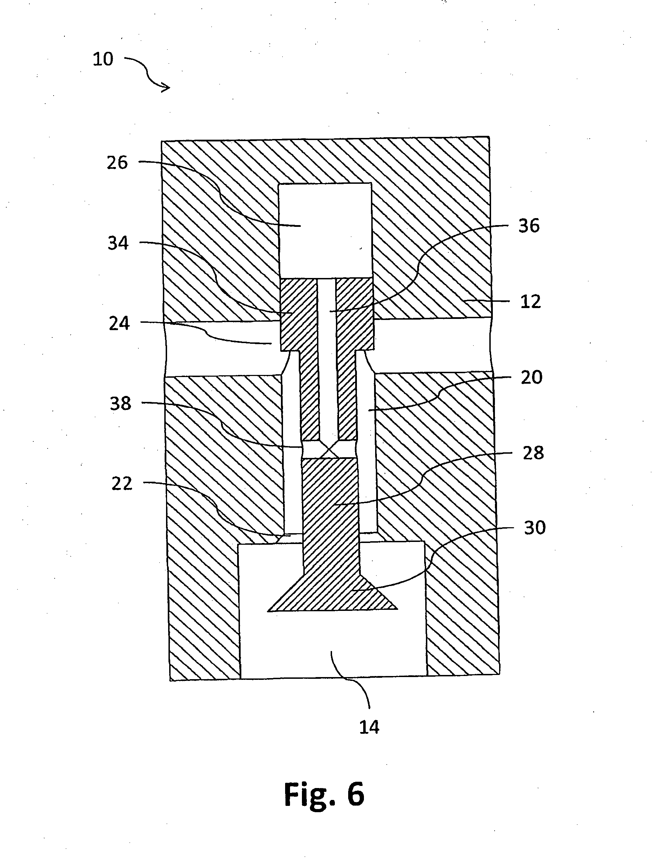

Figur 6 zeigt das in den Figuren 1 bis 5 gezeigte Ventil 10 in einer stark schematisierten Darstellung. Wie anhand der Figur zu erkennen, vereint das Ventil 10 die Vorteile einer zuverlässigen Absperrung eines Massenstroms, solange der Dichtkegel 30 in fester Anlage gegen den Dichtsitz 32 gebracht ist, und einer hohen Regelgüte des Massenstroms bei geöffneter Dichtkegel-Dichtsitz-Paarung durch präzises Regeln der Öffnungsweite der Auslassöffnung 24 durch ein Verschieben des Schiebers 34. Hierbei sind der Dichtkegel 30 und der Schieber 34 fest mit dem Kolbenkörper 28 verbunden. Besonders bevorzugt sind der Dichtkegel 30 und/oder der Schieber 34 und/oder der Kolbenkörper 28 und/oder der Anker 42 einstückig ausgebildet. Der Kolbenkörper 28 ist entlang eines Abschnittes zwischen dem Dichtkegel 30 und dem Schieber 34 bis zum distalen Ende mit einer längsgerichteten Druckausgleichsbohrung 36 ausgestattet, welche im geschlossenen Ende 26 mündet. Das dem distalen Ende gegenüberliegende Ende der längsgerichteten Druckausgleichsbohrung 36 ist über zumindest eine quergerichtete Druckausgleichsbohrung 38 mit dem Zylinderraum 20 verbunden. Durch diese Anordnung wird der im Zylinderraum 20 vorherrschende Druck zuverlässig in das geschlossene Ende 26 überführt, wodurch ein Druckausgleich hergestellt ist. Hierdurch wird eine jegliche Störkraftkomponente eliminiert und kann die Regelgüte weiter erhöht werden.

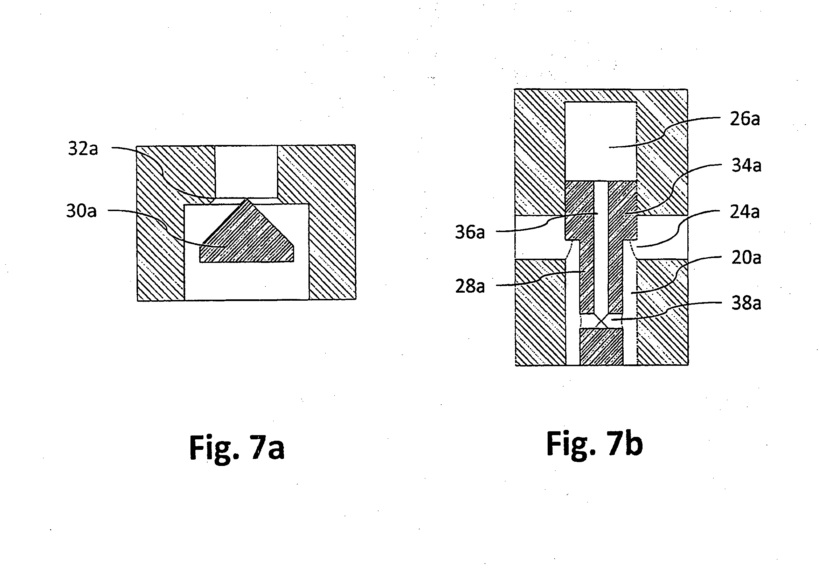

Figur 7a zeigt eine Ansicht einer Dichtkegel-Dichtsitz-Paarung, auch als Kegelsitzdichtung bezeichnet, aus dem Stand der Technik. Zum Absperren der Kegeldichtung wird ein Dichtkegel 30a in feste Anlage gegen einen korrespondierenden Dichtsitz 32a gebracht. Zum Öffnen der Kegelsitzdichtung wird der Dichtkegel 30a aus der Anlage gegen den Dichtsitz 32a gebracht. Bei dieser aus dem Stand der Technik bekannten Dichtung besteht ein Problem darin, dass eine Störkraftkomponente, die beim kontinuierlichen Öffnen des Dichtsitzes die Öffnungskraftkomponente beeinflusst, einer kontinuierlichen Ventilhubregelung stark entgegenwirkt. Dieser Effekt entsteht durch einen Druckabfall auf der Hochdruckseite und einen Druckanstieg auf der Niederdruckseite des Dichtkörpers beim Öffnen des Dichtsitzes.

Figur 7b zeigt ein Schieberventil aus dem Stand der Technik. Ein an einem distalen Ende eines Kolbenkörpers 28a angebrachter Schieber 34a regelt die Öffnungsweite einer Auslassöffnung 24a. Der Kolbenkörper 28a ist entlang eines Abschnittes zwischen dem distalen Ende und einem innerhalb eines Zylinderraums 20a geführten Abschnittes mit einer längsgerichteten Druckausgleichsbohrung 36a versehen, welche am distalen Ende in einem geschlossenen Ende 26a mündet. Das dem distalen Ende gegenüberliegende Ende der längsgerichteten Druckausgleichsbohrung 36a ist über zumindest eine quergerichtete Druckausgleichsbohrung 38a mit dem Zylinderraum 20a verbunden. Durch diese Anordnung wird der im Zylinderraum 20a vorherrschende Druck zuverlässig in das geschlossene Ende 26a überführt. Hierdurch herrscht ein Druckausgleich zwischen dem Zylinderraum 20a und dem geschlossenen Ende 26a, wodurch eine jegliche Störkraftkomponente eliminiert ist. Somit wird dem Schieberventil eine besonders hohe Regelgüte verliehen. Es erweist sich allerdings als nachteilig, dass das Schieberventil, insbesondere bei einem Hochdruck auf der Eingangsseite, eine unzuverlässige Abdichtbarkeit im geschlossenen Zustand aufweist.

## Patentansprüche

1. Ventil (10) zur Druck- oder Massenstromregelung, umfassend:
ein Gehäuse (12) mit einem Eingang (14) und einem Ausgang (16);
einen Zylinder (18) mit einem Zylinderraum (20), durch welchen der Massenstrom führbar ist, mit einem Einlass (22), wenigstens einer entlang der Längsrichtung des Zylinders (18) eingebrachten Auslassöffnung (24) und einem geschlossenen Ende (26);
einen Kolbenkörper (28), welcher sich in den Zylinderraum (20) hinein erstreckt und in Längsrichtung des Zylinderraums (20) verschiebbar ansteuerbar ist, wobei der Kolbenkörper (28) umfasst:
einen Dichtkegel (30), welcher gegen einen am Einlass (22) des Zylinderraums (20) angebrachten Dichtsitz (32) abdichtend in Anlage bringbar ist;
einen innerhalb des Zylinderraums (20) verschiebbar geführten zylindrischen Schieber (34), dessen Aussenmass geringer ist als das Innenmass des Zylinderraums (20), und welcher ausgelegt ist die Öffnungsweite der Auslassöffnung (24) durch die verschiebbare Ansteuerung des Kolbenkörpers (28) zu steuern; **gekennzeichnet durch**
eine Druckausgleichsanordnung, welche ausgelegt ist einen Druckausgleich zwischen dem Zylinderraum (20) und allen mit dem Zylinderraum (20) kommunizierenden Volumina und dem geschlossenen Ende (26) herzustellen; und
ein Antriebselement zum verschiebbaren Ansteuern des Kolbenkörpers (28).

2. Ventil nach Anspruch 1, bei welchem die Druckausgleichsanordnung als eine längsgerichtete Druckausgleichsbohrung (36) ausgebildet ist, welche in Längsrichtung innerhalb des Kolbenkörpers (28) in einem Bereich vom distalen Ende, entlang eines innerhalb des Zylinderraums (20) geführten Abschnittes bis zu wenigstens einer quergerichteten Druckausgleichsbohrung (38) in einem Abschnitt zwischen dem Dichtkegel (30) und dem Schieber (34) bereitgestellt ist.

3. Ventil (10) nach Anspruch 1 oder 2, das einen Positionssensor zur Positionserfassung des Kolbenkörpers (28) umfasst, ausgelegt zur Positionsregelung des Schiebers (34).

4. Ventil (10) nach einem der vorhergehenden Ansprüche, bei welchem das Antriebselement als eine elektromagnetische Zugmagnet-Anordnung ausgebildet ist, umfassend einen zylindrischen Anker (42), mindestens einen magnetischen Rückschluss (50, 50a, 50b), einen Arbeitsluftspalt (52) und eine Spule (44), zur Erzeugung einer elektromagnetischen Kraft in Abhängigkeit von einer Bestromung der Spule (44), Kraft die verschiebbare Ansteuerung des Kolbenkörpers (28) in Längsrichtung des Zylinderraums (20) hervorruft, ferner umfassend ein Rückstellelement, welches ausgelegt ist den Kolbenkörper (28) entgegen der Kraftrichtung der elektromagnetischen Zugmagnet-Anordnung vorzuspannen.

5. Ventil (10) nach Anspruch 4, bei welchem der Anker (42) an einem ausserhalb des Zylinderraums (20) geführten Abschnitt des Kolbenkörpers (28) und koaxial zu diesem ausgerichtet mit dem Kolbenkörper (28) verbunden ist.

6. Ventil (10) nach Anspruch 4 oder 5, bei welchem die Spule (44) als Topfmagnetspule ausgebildet ist, welche koaxial zum Anker (42) ausgerichtet im oder am Ventil (10) befestigt ist.

7. Ventil (10) nach einem der Ansprüche 4 bis 6, bei welchem der Dichtkegel (30) und/oder der Schieber (34) und/oder der Anker (42) einstückig mit dem Kolbenkörper (28) ausgebildet sind.

8. Ventil (10) nach einem der Ansprüche 4 bis 7, bei welchem der Anker (42) in einem Druckrohr (46) verschiebbar ist, dessen Innenmass grösser ist als das Aussenmass des Ankers (42).

9. Ventil (10) nach einem der vorhergehenden Ansprüche, bei welchem der Kolbenkörper (28) an wenigstens einem seiner Enden durch eine Längsführung (40) gelagert ist.

10. Ventil(10) nach einem der vorhergehenden Ansprüche, bei welchem der Kolbenkörper (28) an der Anordnung bestehend aus Schieber (34) und Zylinder (18) gelagert ist.

11. Ventil (10) nach einem der Ansprüche 4 bis 10, bei welchem der Anker (42) mit in Längsrichtung ausgerichteten Durchgangsbohrungen (48) versehen ist, zur Bereitstellung einer Massenstrom-Verbindung vom Eingang (14) des Gehäuses (12) zum Einlass (22) des Zylinderraums (20).

12. Ventil (10) nach einem der Ansprüche 4 bis 11, bei welchem der Dichtkegel (30) an einem ausserhalb des Zylinderraums (20) geführten Abschnitt des Kolbenkörpers (28) angeordnet ist und von ausserhalb des Zylinderraums (20) gegen den am Einlass (22) des Zylinderraums (20) angebrachten Dichtsitz (32) abdichtend in Anlage bringbar ist.

13. Verfahren zur Druck- oder Massenstromregelung durch ein Ventil (10) nach einem der vorhergehenden Ansprüche, **gekennzeichnet durch** die Schritte:
a) Ansteuern des Kolbenkörpers (28) **durch** das Antriebselement mit einer Regelgrösse zum Bewegen des Kolbenkörpers (28) in eine der Verschlussrichtung der Dichtkegel-Dichtsitz-Paarung entgegengesetzte Richtung, wodurch die Öffnungsweite der Auslassöffnung (24) **durch** den Schieber (34) minimiert wird,
b) Regeln der Ansteuerung des Kolbenkörpers (28) mit einer regelbaren Regelgrösse, wodurch die Öffnungsweite der Auslassöffnung (24) **durch** Verschieben des Schiebers (34) in Relation zur Regelgrösse erweitert oder verengt wird, und
c) Ausschalten der Ansteuerung des Kolbenkörpers (28), wodurch der Kolbenkörper (28) in die in Verschlussrichtung der Dichtkegel-Dichtsitz-Paarung gerichtete Richtung bewegt wird, zum vollständigen Absperren des Massenstroms, indem der Dichtkegel (30) gegen den Dichtsitz (32) in Anlage gebracht wird.

14. Verfahren nach Anspruch 13, bei welchem die Ansteuerung in Ansprechen auf eine von einem Positionssensor erfasste Position des Kolbenkörpers (28) geregelt wird.

15. Verfahren nach Anspruch 13 oder 14, bei welchem der Schritt des Ansteuerns des Kolbenkörpers (28) durch das Antriebselement einen Schritt zum Ansteuern des Kolbenkörpers (28) mit einem Öffnungsimpuls zum Entdrosseln des Dichtsitzes (32) umfasst.

16. Verfahren nach Anspruch 13, bei welchem das Antriebselement als eine elektromagnetische Zugmagnet-Anordnung ausgebildet ist.

17. Verfahren nach Anspruch 16, bei welchem der Schritt des Ansteuerns des Kolbenkörpers (28) durch das Antriebselement einen Schritt zum Ansteuern des Kolbenkörpers (28) mit einer maximalen Regelgrösse umfasst, wobei der Kolbenkörper (28) beim Ansteuern bis zu einem mechanischen Endanschlag bewegt wird.

18. Verfahren nach Anspruch 16 oder 17, wobei das Ventil (10) ferner ein Rückstellelement umfasst, welches den Kolbenkörper (28) entgegen der Kraftrichtung der elektromagnetischen Zugmagnet-Anordnung vorspannt.

19. Anordnung, umfassend ein Ventil (10) nach einem der Ansprüche 1 bis 12 und eine druckregelnde Vorstufe.

20. Anordnung nach Anspruch 19, wobei die druckregelnde Vorstufe passiv ist.

21. Anordnung nach Anspruch 19 oder 20, wobei die druckregelnde Vorstufe eine Druckwaage ist.

## Claims

1. A valve (10) for pressure or mass flow control, comprising:
a housing (12) with an inlet (14) and an outlet (16) ;
a cylinder (18) with a cylinder chamber (20), through which the mass flow can be conducted, with an inlet (22), at least one outlet opening (24) introduced along the longitudinal direction of the cylinder (18) and a closed end (26);
a piston body (28), which extends into the cylinder chamber (20) and can be actuated in a sliding manner in the longitudinal direction of the cylinder chamber (20), wherein the piston body (28) comprises:
a sealing cone (30), which can be seated in a sealing manner against a sealing seat (32) provided at the inlet (22) of the cylinder chamber (20);
a cylindrical slider (34), which is guided displaceably inside the cylinder chamber (20) and the external dimension of which is smaller than the internal dimension of the cylinder chamber (20), and which is designed to control the opening width of the outlet opening (24) by the sliding actuation of the piston body (28); **characterised by**
a pressure equalisation arrangement, which is designed to produce a pressure equalisation between the cylinder chamber (20) and all the volumes communicating with the cylinder chamber (20) and the closed end (26); and
a drive element for the sliding actuation of the piston body (28).

2. The valve according to claim 1, wherein the pressure equalisation arrangement is constituted as a longitudinally directed pressure equalisation bore (36), which is provided in the longitudinal direction inside the piston body (28) in a region from the distal end, along a section led inside the cylinder chamber (20), up to at least one transversely directed pressure equalisation bore (38) in a section between the sealing cone (30) and the slider (34).

3. The valve (10) according to claim 1 or 2, which comprises a position sensor for the position detection of the piston body (20), designed for the position control of the slider (34).

4. The valve (10) according to any one of the preceding claims, wherein the drive element is constituted as an electromagnetic pull magnet arrangement, comprising a cylindrical armature (42), at least one magnetic return (50, 50a, 50b), a working air gap (52) and a coil (44), for generating an electromagnetic force depending on energisation of the coil (44), which force brings about the sliding actuation of the piston body (28) in the longitudinal direction of the cylinder chamber (20), further comprising a resetting element, which is designed to preload the piston body (28) against the force direction of the electromagnetic pull magnet arrangement.

5. The valve (10) according to claim 4, wherein the armature (42) is connected to the piston body (28) at a section of the piston body (28) outside the cylinder chamber (20) and aligned coaxial with said piston body.

6. The valve (10) according to claim 4 or 5, wherein the coil (44) is constituted as a pot-shaped magnetic coil, which is fixed in or on the valve (10) so as to be aligned coaxially with the armature (42).

7. The valve (10) according to any one of claims 4 to 6, wherein the sealing cone (30) and/or the slider (34) and/or the armature (42) are constituted integral with the piston body (28).

8. The valve (10) according to any one of claims 4 to 7, wherein the armature (42) is displaceable in a pressure tube (46), the internal dimension whereof is greater than the external dimension of the armature (42).

9. The valve (10) according to any one of the preceding claims, wherein the piston body (28) is mounted at at least one of its ends by means of a longitudinal guide (40).

10. The valve (10) according to any one of the preceding claims, wherein the piston body (28) is mounted on the arrangement comprising the slider (34) and the cylinder (18).

11. The valve (10) according to any one of claims 4 to 10, wherein the armature (42) is provided with through-bores (48) aligned in the longitudinal direction, for providing a mass flow connection from the inlet (14) of the housing (12) to the inlet (22) of the cylinder chamber (20).

12. The valve (10) according to any one of claims 4 to 11, wherein the sealing cone (30) is disposed on a section of the piston body (28) led outside the cylinder chamber (20) and can be seated in a sealing manner from outside the cylinder chamber (20) against the sealing seat (32) provided at the inlet (22) of the cylinder chamber (20).

13. A method for pressure or mass flow control by means of a valve (10) according to any one of the preceding claims, **characterised by** the steps:
a) actuation of the piston body (28) by means of the drive element with a controlled variable for moving the piston body (28) in a direction opposite to the closing direction of the sealing cone/sealing seat pair, as a result of which the opening width of the outlet opening (24) is minimised by the slider (34),
b) control of the actuation of the piston body (28) with a controllable controlled variable, as a result of which the opening width of the outlet opening (24) is widened or narrowed by displacing the slider (34) relative to the controlled variable, and
c) switching-off of the actuation of the piston body (28), as a result of which the piston body (28) is moved in the direction directed in the closing direction of the sealing cone/sealing seat pair, for complete shutting-off of the mass flow, by the fact that the sealing cone (30) is seated against the sealing seat (32).

14. The method according to claim 13, wherein the actuation is controlled in response to a position of the piston body (28) detected by a position sensor.

15. The method according to claim 13 or 14, wherein the step of actuating the piston body (28) by means of the drive element comprises a step for actuating the piston body (28) with an opening impulse for de-throttling the sealing seat (32).

16. The method according to claim 13, wherein the drive element is constituted as an electromagnetic pull magnet arrangement.

17. The method according to claim 16, wherein the step of actuating the piston body (28) by means of the drive element comprises a step for actuating the piston body (28) with a maximum controlled variable, wherein the piston body (28) is moved when actuated up to a mechanical end stop.

18. The method according to claim 16 or 17, wherein the valve (10) further comprises a resetting element, which preloads the piston body (28) against the force direction of the electromagnetic pull magnet arrangement.

19. An arrangement, comprising a valve (10) according to any one of claims 1 to 12 and a pressure-regulating preliminary stage.

20. The arrangement according to claim 19, wherein the pressure-regulating preliminary stage is passive.

21. The arrangement according to claim 19 or 20, wherein the pressure-regulating preliminary stage is a pressure balance.

## Revendications

1. Soupape (10) pour le réglage de la pression ou du débit massique, comprenant :
un logement (12) comprenant une entrée (14) et une sortie (16) ;
un vérin (18) comprenant un espace de vérin (20), à travers lequel le débit massique peut être dirigé, avec une admission (22), au moins une ouverture d'évacuation (24) intégrée le long du sens longitudinal du vérin (18) et une extrémité fermée (26) ;
un corps de piston (28) qui s'étend à l'intérieur de l'espace de vérin (20) et peut être commandé en pouvant être déplacé dans le sens longitudinal de l'espace de vérin (20), sachant que le corps de piston (28) comprend :
un cône d'étanchéité (30) qui peut être mis en appui étanche contre un siège d'étanchéité (32) placé sur l'admission (22) de l'espace de vérin (20) ;
un registre (34) cylindrique dirigé en pouvant être déplacé à l'intérieur de l'espace de vérin (20), dont la dimension extérieure est inférieure à la dimension intérieure de l'espace de vérin (20) et lequel est conçu pour commander la largeur d'ouverture de l'ouverture d'évacuation (24) par la commande pouvant être déplacée du corps de piston (28) ; **caractérisé par**
un dispositif de compensation de pression qui est conçu pour établir une compensation de pression entre l'espace de vérin (20) et tous les volumes communiquant avec l'espace de vérin (20) et l'extrémité fermée (26) ; et
un élément d'entraînement pour la commande pouvant être déplacée du corps de piston (28).

2. Soupape selon la revendication 1, dans laquelle le dispositif de compensation de pression est conçu en tant que perçage d'équilibrage de pression (36) orienté en longueur qui est mis à disposition longitudinalement à l'intérieur du corps de piston (28) dans une zone de l'extrémité distale, le long d'un tronçon dirigé à l'intérieur de l'espace de vérin (20) jusqu'au moins un perçage d'équilibrage de pression (38) orienté transversalement dans un tronçon entre le cône d'étanchéité (30) et le registre (34).

3. Soupape (10) selon la revendication 1 ou 2, qui comprend un capteur de position pour détecter la position du corps de piston (28), conçu pour régler la position du registre (34) .

4. Soupape (10) selon l'une des revendications précédentes, dans laquelle l'élément d'entraînement est conçu en tant qu'agencement à aimant de traction électromagnétique, comprend un induit cylindrique (42), au moins un blindage (50, 50a, 50b), une fente d'air de travail (52) et une bobine (44), pour produire une force électromagnétique en fonction d'une alimentation de la bobine (44), force qui provoque la commande pouvant être déplacée du corps de piston (28) dans le sens longitudinal de l'espace de vérin (20), comprenant en outre un élément de rappel qui est conçu pour pré-contraindre le corps de piston (28) contre le sens de la force de l'agencement à aimant de traction électromagnétique.

5. Soupape (10) selon la revendication 4, dans laquelle l'induit (42) est relié à un tronçon du corps de piston (28) dirigé hors de l'espace de vérin (20) et orienté coaxialement à celui-ci avec le corps de piston (28).

6. Soupape (10) selon la revendication 4 ou 5, dans laquelle la bobine (44) est conçue en tant que bobine à aimant en pot, laquelle est orientée coaxialement à l'induit (42) dans ou sur la soupape (10).

7. Soupape (10) selon l'une des revendications 4 à 6, dans laquelle le cône d'étanchéité (30) et/ou le registre (34) et/ou l'induit (42) sont conçus d'un seul tenant avec le corps de soupape (28).

8. Soupape (10) selon l'une des revendications 4 à 7, dans laquelle l'induit (42) peut être déplacé dans un tube de pression (46) dont la dimension intérieure est supérieure à la dimension extérieure de l'induit (42).

9. Soupape (10) selon l'une des revendications précédentes, dans laquelle le corps de piston (28) est disposé à travers un guide longitudinal (40) par au moins une de ses extrémités.

10. Soupape (10) selon l'une des revendications précédentes, dans laquelle le corps de piston (28) est disposé sur l'agencement se composant du registre (34) et du vérin (18).

11. Soupape (10) selon l'une des revendications 4 à 10, dans laquelle l'induit (42) est doté de perçages traversants (48) orientés dans le sens longitudinal, pour mettre à disposition une liaison de débit massique de l'entrée (14) du logement (12) à l'admission (22) de l'espace de vérin (20).

12. Soupape (10) selon l'une des revendications 4 à 11, dans laquelle le cône d'étanchéité (30) est disposé sur un tronçon du corps de piston (28) dirigé hors de l'espace de vérin (20) et peut être amené en appui étanche contre le siège d'étanchéité (32) placé sur l'admission (22) de l'espace de vérin (20).

13. Procédé de réglage de la pression ou du débit massique par une soupape (10) selon l'une des revendications précédentes, **caractérisé par** les étapes suivantes :
a) commande du corps de piston (28) à travers l'élément d'entraînement avec une grandeur de réglage pour déplacer le corps de piston (28) dans un sens opposé au sens de fermeture de la paire cône d'étanchéité-siège d'étanchéité, ce qui réduit la largeur d'ouverture de l'ouverture d'évacuation (24) par le registre (34).
b) réglage de la commande du corps de piston (28) avec une grandeur de réglage réglable, ce qui élargit ou réduit la largeur d'ouverture de l'ouverture d'évacuation (24) par le déplacement du registre (34) par rapport à la grandeur de réglage, et
c) mise hors marche de la commande du corps de piston (28), ce qui déplace le corps de piston (28) dans le sens orienté dans le sens de fermeture de la paire cône d'étanchéité-siège d'étanchéité, pour bloquer totalement le débit massique, en ce que le cône d'étanchéité (30) est amené en appui contre le siège d'étanchéité (32).

14. Procédé selon la revendication 13, dans lequel la commande est réglée en réponse à une position du corps de soupape (28) détectée par un capteur de position.

15. Procédé selon la revendication 13 ou 14, dans lequel l'étape de commande du corps de piston (28) par l'élément d'entraînement comprend une étape de commande du corps de piston (28) avec une impulsion d'ouverture pour libérer le siège d'étanchéité (32).

16. Procédé selon la revendication 13, dans lequel l'élément d'entraînement est conçu en tant qu'agencement à aimant de traction électromagnétique.

17. Procédé selon la revendication 16, dans lequel l'étape de commande du corps de piston (28) par l'élément d'entraînement comprend une étape de commande du corps de piston (28) avec une grandeur de réglage maximale, sachant que le corps de piston (28) est déplacé jusqu'à une butée d'extrémité mécanique pendant la commande.

18. Procédé selon la revendication 16 ou 17, dans lequel la soupape (10) comprend en outre un élément de rappel qui pré-contraint le corps de piston (28) contre le sens de la force de l'agencement à aimant de traction électromagnétique.

19. Agencement, comprenant une soupape (10) selon l'une des revendications 1 à 12 et une étape préalable de réglage de pression.

20. Agencement selon la revendication 19, dans lequel l'étape préalable de réglage de pression est passive.

21. Agencement selon la revendication 19 ou 20, dans lequel l'étape préalable de réglage de pression est une balance de pression.
